# EUROPEAN PATENT APPLICATION

(11) **EP 1 319 534 A2**
(43) Date of publication of application: **18.06.2003**
(21) Application number: 02005957.2
(22) Date of filing: 15.03.2002
(51) Int. Cl.: B60G 7/00

(54) **Vehicle suspension bush**

(30) Priority: 17.12.2001 KR 2001080237
(71) Applicant: Kia Motors Co., Ltd., Kwang Myung-shi, Gyeonggi-do (KR)
(72) Inventor: Bae, Kyung Il, 202, Ra-dong, Dongnam yulrib, Gyeonggi-do (KR)
(74) Representative: Sawodny, Michael-Wolfgang

(57) **Abstract**

A vehicle suspension bush enhances safety and ride comfort by controlling a vehicle's wheels' toe on turn. It also improves turning performance of a vehicle by inducing movement of the suspension, which is caused by a lateral force on the turn, with toe-in and reinforcing lateral stiffness of suspension. The bush consists of an outer pipe comprising a horizontal part and a flange perpendicular to the horizontal part, and a main body, that is inserted into the outer pipe. The front and rear of the main body are asymmetrical when installed to the trailing arm bracket of the suspension. The inner pipe is inserted into the main body and fixed to the trailing arm bracket by a fastening device.

## Description

### Cross Reference to Related Application

Applicant claims priority from Korean patent application No. 2001-80237 filed December 17, 2001.

### Background of the Invention

### 1. Technical Field

This invention relates to a vehicle suspension bush. More specifically, this invention is a vehicle suspension bush that can improve the turning performance of a vehicle by inducing movement of the suspension caused by the lateral force that occurs during a turn with toe-in and reinforcing lateral suspension stiffness.

### 2. Description of Prior Art

In general, vehicles such as passenger cars are equipped with a suspension that is designed to improve ride comfort by absorbing or reducing vibrations or shocks delivered from the road to the axle while the vehicle is moving, and ultimately preventing the vibration or shock from being directly conveyed to the axle. Such types of suspensions fall into several categories depending on composition, such as rigid axle suspension and independent suspension. Another kind is the torsion beam type suspension, also known as the trailing arm type suspension or semi-rigid axle type suspension, which is an improved version of the rigid axle suspension. The torsion beam type suspension is classified into the axle beam type, the pivot beam type, and the coupled beam type depending on where the torsion beam is attached.

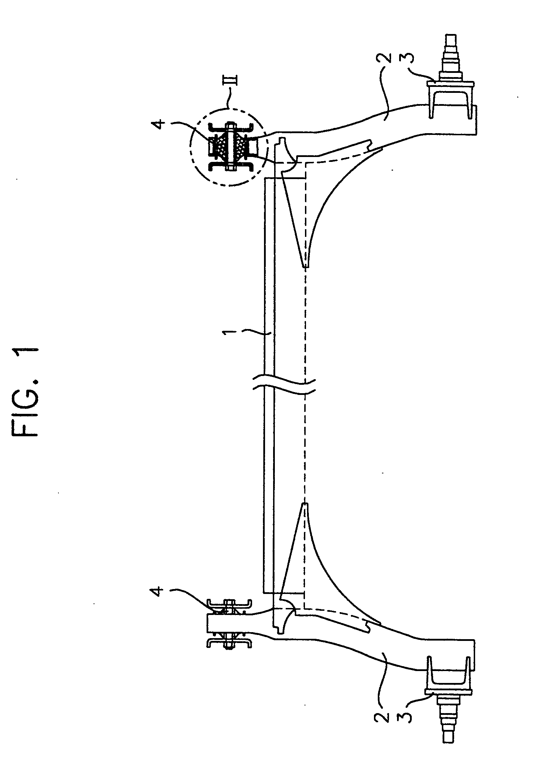

Torsion beam suspension, as shown in FIG.1, includes a torsion beam 1 that is placed lateral to a vehicle's body. At both ends of the torsion beam, trailing arms 2 are installed symmetrically. In the lower part of the trailing arms 2, a hub (not shown) is fixed to some extent so that the spindle to which wheels are attached can move freely to a certain degree. In addition, in the upper part of the trailing arms 2, a suspension link (not shown) is placed. Meanwhile, a bush 4 attaches the suspension link to the trailing arms 2.

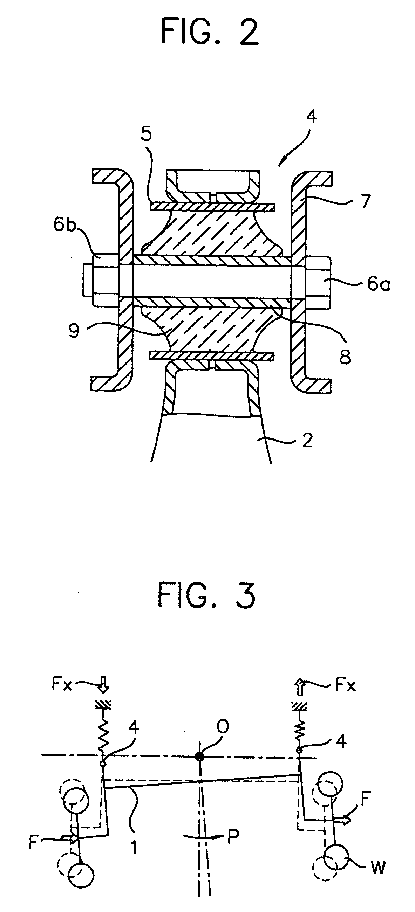

As shown in detail in FIG. 2, the bush 4 consists of an outer pipe 5 that is inserted into the end part of the trailing arm 2, an inner pipe 8 that is attached to a trailing arm bracket 7 by fastening devices such as bolts 6a and nuts 6b, and a main body 9 that is inserted between the outer pipe 5 and the inner pipe 8. The main body 9 is made of elastic material such as rubber to absorb or alleviate vibrations or shocks from the trailing arms 2. This sort of traditional bush can add two holes at the front and back facing each other to smooth out the forward and backward movement, and a separate stopper to control the lateral displacement.

As shown in FIG. 3, wheels W of a vehicle move along the dotted line when a vehicle goes straight. However, when the vehicle that has a traditional suspension bush makes a turn, its suspension encounters a lateral force from outside to inside of the turning direction. Due to the lateral force, the outer bush moves to the rear of the interior while the inner bush moves to the front of the interior. Under this condition, the wheels W actually move along the solid line, causing unwanted movement of the suspension.

Also, because of this movement of the suspension, a toe-out wheel alignment results, ultimately leading to decreased suspension performance and ride comfort.

### Summary of the Invention

The present invention is designed to solve the aforementioned problems. The purpose of the invention is threefold. First, it provides a vehicle suspension bush to enhance safety and ride comfort when a vehicle makes a turn.

Second, it provides a vehicle suspension bush to prevent toe-out during a turn.

Third, it provides a vehicle suspension bush to improve a vehicle's turning performance by inducing a suspension movement caused by lateral force during a turn with toe-in and reinforcing lateral stiffness of the suspension.

The disclosed vehicle suspension bush satisfies the aforementioned purposes. The bush consists of an outer pipe, a main body, and an inner pipe. The outer pipe has integrated a horizontal part and a vertical part. The main body is integrally inserted into the outer pipe so that fits into the outer pipe. When the trailing arm suspension bracket 7 is installed to the main body, main body's front and rear section looks asymmetrical. The inner pipe is integrally inserted into the main body, and is fixed to the trailing arm bracket by fastening devices.

The above and other advantages of embodiments of this invention will be apparent from the following more detailed description when taken in conjunction with the accompanying drawings.

### Brief Description of Drawings

FIG. 1 is a front view of a partial cross section that shows a general vehicle suspension.

FIG. 2 is an enlarged cross section of a bush in the vehicle suspension 4 of FIG. 1.

FIG. 3 is a diagram of wheel movement when a bush-equipped vehicle makes a turn.

FIG. 4 is a side perspective view of the vehicle suspension bush according to the present invention.

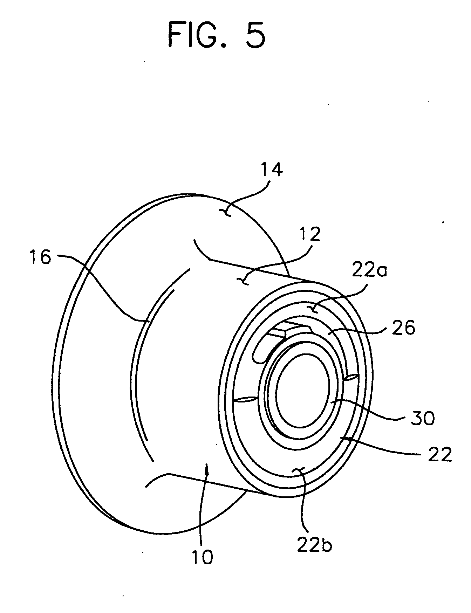

FIG. 5 is other side perspective view of the vehicle suspension bush according to the present invention.

FIG. 6 is a cross section of FIG. 4.

FIG. 7 is a cross section that shows the bush that will be mounted to the trailing arm bracket of the suspension.

FIG. 8 is a diagram that shows how a vehicle equipped with the bush according to the present invention controls its wheels' toe during a turn.

FIG. 9 is a diagram that shows how a bush changes as a vehicle makes a turn.

### Detailed Description of the Preferred Embodiment

In the following description, the preferred embodiment according to the present invention will be explained in detail based on attached drawings.

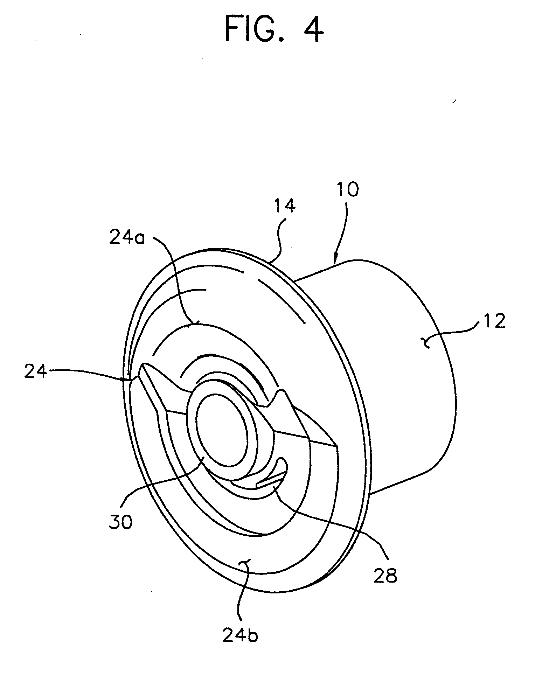

First, FIGS. 1 and 2 show an overall shape of a vehicle suspension bush. The invented bush has an outer pipe 10, as shown in FIG. 4. In particular, the outer pipe 10 consists of a horizontal part that is inserted into the trailing arm (not shown in the drawings), and a vertical part, also known as a flange 14, that is perpendicular to the horizontal part. The two parts are joined. Preferably, the junction of horizontal part and flange is rounded. The outer pipe 10 is preferably made of metal. Because of the overall structure of outer pipe 10, it can be inserted into the trailing arm pipe while installing a bush. Also, the structure enables a toe-controlling bush to be attached to the inside. The toe-controlling bush will be described in more detail later.

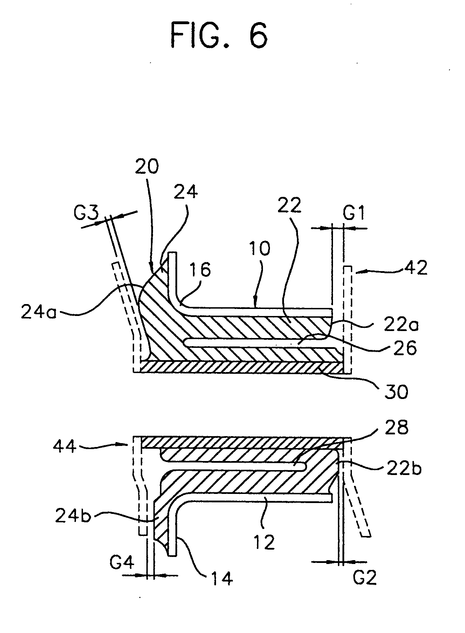

As shown in FIG. 6, a main body 20 is placed inside the outer pipe 10. The main body 20 is made of elastic material such as rubber to absorb and reduce shocks and vibrations. It is preferred that the main body 20 is formed fit to the outer pipe 10. The main body 20 consists of a horizontal part 22 that is attached to the horizontal part 12 of the outer pipe 10, and of a vertical part 24 that is perpendicular to the horizontal part 22 and attached to flange 14.

In particular, to control stiffness of the front and the rear, main body 20 has two holes. A front hole 26 is formed from outside toward inside at the upper part of the horizontal part 22 to control stiffness of the front. A rear hole 28 is formed from inside toward outside at the lower part of the horizontal part 22 to control stiffness of the rear. It is preferred that the front hole 26 and the rear hole 28 have bent sections to control stiffness effectively.

Additionally, the thickness of a front section 24a of the vertical part 24 and that of a rear section 24b is different from each other so that the main body 20 can play its main role of controlling toe with its shape. More specifically, the thickness of the front section 24a of the vertical part 24 is preferably smaller than that of the rear section 24b. Moreover, it is preferred that the thickness of an outer section of the front area 22a in the horizontal part 22 be smaller than that of a rear area 22b.

Inside the main body, an inner pipe 30 is inserted and fixed to the trailing arm bracket by fastening devices such as bolts and nuts nut shown. The trailing arm bracket will be described in more detail later. Inner pipe 30 is a metal pipe in the shape of a usual cylinder.

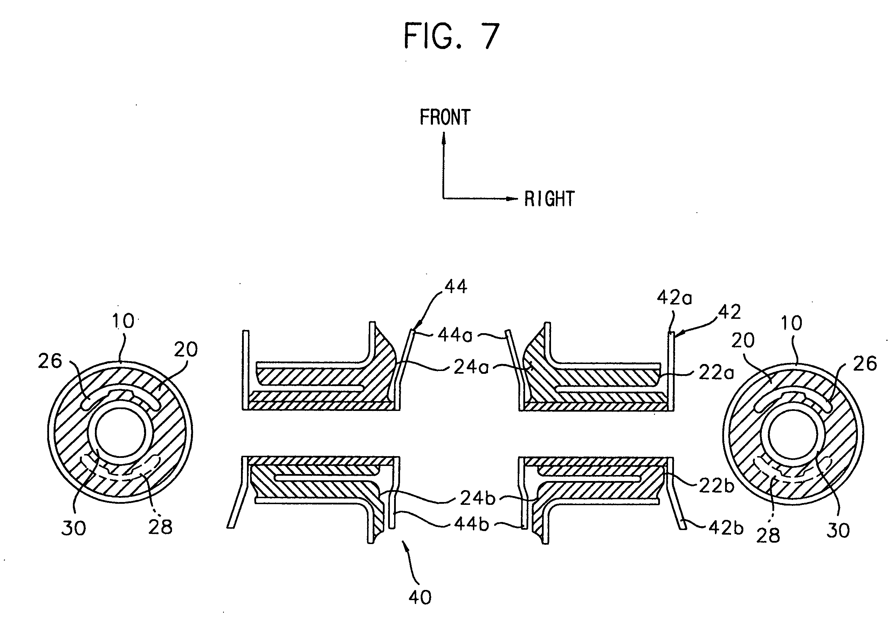

Referring to FIG. 7, it is optional to change the form of trailing arm bracket 40 to make it fit the invented bush. The purpose of this transformation is to control the overall toe of wheel. More specifically, it is preferred that gaps between the front and the rear of the main body 20 and the bush and corresponding areas of the trailing arm bracket be all different. In particular, the front area 42a of inner bracket member 42 in the trailing arm bracket 40 is formed bent and slanted toward the inside, while the rear area 42b is formed slanted toward the outside. The result is step-shaped. However, it is preferred that the front area 44a of outer bracket member 44 in trailing arm bracket 40 is straight while the rear area 44b is slanted toward the outside to some extent.

In the following, installation of the aforementioned bush and how it operates is described.

The bush can be installed to the trailing arm by fixing the inner pipe 30 to the trailing arm bracket 40 with fastening devices such as bolts and nuts (not shown) as mentioned above. Then, the interior and exterior of front and rear area of the bush's main body 20, the front and rear areas of bracket's inner member, and the front and rear areas of outer member are placed in a way that gaps between each part are all different. Namely, the front area 22a of a section of the horizontal part 22 in the bush's main body 20 and the front area 42a of the outer bracket member in the trailing arm bracket 40 form a first gap G1. The rear area 22b of the outer section in the horizontal part 22 and the rear area 42b of the outer bracket member in trailing arm bracket 40 form a second gap G2. The front section 24a of the vertical part 24 in bush's main body 20 and the front area 44a of the outer bracket member 44 in trailing arm bracket 40 form a third gap G3. The rear section 24b of the vertical part 24 and the rear area 44b of the outer bracket member 44 in the trailing arm bracket 40 form a fourth gap G4. Preferably, the size of each gap should be in the order of G1>G4>G2>G3. As a result, toe is controlled mostly by the vertical part of main body 20. The outer pipe 10 and trailing arm bracket 40 do not interfere with each other.

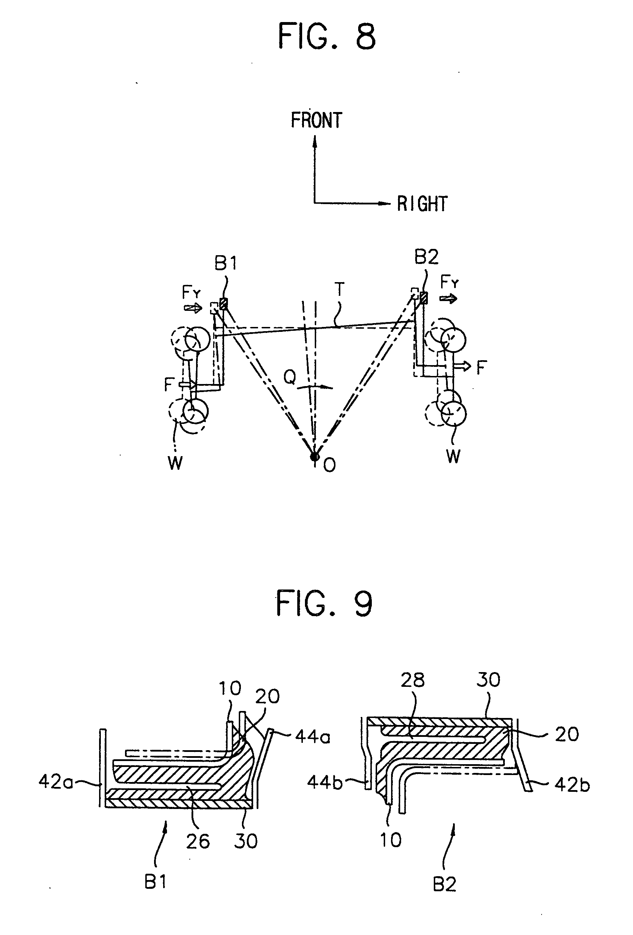

In FIG. 8, wheels W of a vehicle move normally along the irregular dotted line if the bush is installed. When the vehicle makes a left turn under this condition, lateral force is added to each bush and torsion beam T as shown by the regular dotted line. With the lateral force, as shown in FIG. 9, the main body 20 of the left bush B1 moves toward front right while the main body 20 of the right bush B2 moves to rear right. As a result, the whole torsion beam T is under toe-in condition. Then, as shown in FIG. 8, wheels W are aligned along the solid line to make a stable turn.

In this working example, described was how to control a toe-out that was caused by a left turn. However, whoever is engaged in this technological field will be able to understand that the same mechanism will apply to the case of a right turn.

In conclusion, the invented bush for suspension of a vehicle improves safety and ride comfort because bush's main body, made of rubber, can control wheel toe.

Other merits are to prevent toe-out on turn and to improve a vehicle's turning performance by inducing movements of suspension caused by lateral force on turn with toe-in and enhancing lateral stiffness of suspension.

While the invention has been described with regards to specific embodiments and specifications, those skilled in the art will recognize that changes can be made in form and detail without departing from the spirit and scope of the invention.

## Claims

1. A vehicle suspension bush that is installed to a trailing arm bracket of a suspension to buffer or absorb shocks to the body of a vehicle comprising:
an outer pipe including a horizontal part and a flange perpendicular to the horizontal part;
a main body that is inserted in said outer pipe and fitted to said outer pipe so that front and rear areas of the main body are asymmetrical when the main body is installed to the trailing arm bracket of suspension; and
an inner pipe that is integrally inserted within the inside of said main body and is fixed to said trailing arm bracket by fastening devices.

2. The vehicle suspension bush as claimed in claim 1, wherein said main body comprises a horizontal part that is attached to the horizontal part of said outer pipe, and a vertical part that is generally perpendicular to said horizontal part and is attached to said flange.

3. The vehicle suspension bush as claimed in claim 2, wherein:
said main body's horizontal part has a front hole and a rear hole;
said front hole is located in the front area of said main body's horizontal part;
said front hole is formed from outside toward inside to control stiffness of bush's front;
said rear hole is located in the rear area of said main body's horizontal part; and
said rear hole is formed from inside toward outside so as to control stiffness of bush's rear when said bush is installed to the trailing arm bracket.

4. The vehicle suspension bush as claimed in claim 3, wherein thickness of the vertical part's front area in said main body is smaller than that of the rear area while thickness of the outer section's front area in said main body is smaller that that of the rear area.

5. The vehicle suspension bush as claimed in claim 4, wherein gaps between the front and rear of said main body and the front and rear of trailing arm bracket are all different in size.

6. The vehicle suspension bush as claimed in claim 5, wherein the size of each the gaps between said main body and the trailing arm bracket are different and are in the following order descending from largest to smallest:
first, the gap between the front area of horizontal part's section in said main body and the front area of the outer bracket member in the trailing arm bracket;
second, the gap between the rear area of said vertical part and the rear area of the inner bracket member in trailing arm bracket;
third, the gap between the rear area of said horizontal part's outer section and the rear area of the outer bracket member in trailing arm bracket; and
fourth, the gap between the front area of horizontal part in said main body and the front area of the inner bracket member in the trailing arm bracket.
